# FASCICULE DE BREVET EUROPEEN

(11) **EP 1 351 776 B1**
(45) Date de publication et mention de la délivrance du brevet: **17.05.2006**
(21) Numéro de dépôt: 02711992.4
(22) Date de dépôt: 17.01.2002
(51) Int. Cl.: B05B 12/14, F16K 27/00

(54) **MODULE DE BLOC CHANGEUR DE TEINTE POUR INSTALLATION DE PEINTURE**
VENTIL-MODUL FÜR FARBVORRICHTUNG
COLOUR SHADE CHANGING UNIT MODULE FOR PAINTING INSTALLATION

(30) Priorité: 19.01.2001 FR 0100758
(43) Date de publication de la demande: 15.10.2003
(73) Titulaire: Eisenmann France SARL, F-78400 Chatou (FR)
(72) Inventeur: ROGRIGUES, José, F-38650 ST GUILLAUME (FR); LABORIE, Xavier, F-38410 URIAGE (FR)
(74) Mandataire: Bratel, Gérard
(86) Numéro de dépôt international: PCT/FR2002/000187
(87) Numéro de publication internationale: WO 2002/057023

(56) Documents cités:
- FR-A- 2 777 482
- US-A- 3 373 762
- US-A- 3 912 235

## Description

La présente invention a pour objet un module de bloc changeur de teinte pour installation de peinture. Un bloc de changement de teinte est un assemblage de conduits et de vannes correspondant chacune à une teinte et qui ont une sortie commune. Cette sortie est un canal d'alimentation en peinture qui est relié à une buse d'injection située dans un pulvérisateur.

Si l'on considère le cas de la peinture de véhicules automobiles, il est fréquent qu'un constructeur prévoie une installation de peinture avec une possibilité d'alimentation d'une buse d'injection en un nombre de teintes pouvant être compris entre vingt et quarante. Mais il est également fréquent qu'au bout de quelques années il soit nécessaire de rajouter quelques teintes supplémentaires. Dans ces conditions, un bloc de changement de teinte doit pouvoir convenir pour plus de quarante teintes.

Un bloc changeur de teinte, comme décrit dans le document FR 2 777 482, est composé d'un certain nombre de modules assemblés les uns aux autres, le nombre de modules étant fonction du nombre de teintes à gérer, et le nombre de teintes pouvant être augmenté par rajout de certains modules, si besoin est.

Suivant une possibilité connue, chaque module possède une forme générale parallélépipédique comportant deux pans coupés, disposés symétriquement, dans lesquels débouchent au moins deux alésages convergents vers un canal, central et perpendiculaire aux faces d'extrémité du module, et débouchant également dans ce canal. Chaque alésage sert au logement d'une vanne dont le clapet est destiné, suivant sa position, à isoler ou à mettre en communication, avec le canal central, une chambre dans laquelle débouchent deux canaux respectivement d'amenée de peinture et de retour de peinture au réservoir. Ces deux canaux débouchent dans la paroi du module opposée à celle comportant les pans coupés.

Il faut tenir compte du fait que le bloc changeur de teinte doit être implanté le plus près possible de la buse de pulvérisation, afin de limiter les pertes de peinture lors du passage d'une teinte à une autre. Le bloc changeur de teinte doit donc être monté au bout du bras d'un robot de peinture, de telle sorte que ses dimensions incluant les conduits d'amenée et de retour de peinture doivent être les plus faibles possible tout en assurant une excellente sécurité d'exploitation et en permettant une maintenance facile. En effet, chacun des alésages convergeant vers le canal central du module communique avec l'une des teintes du système général de distribution de peinture. Ainsi la moindre "fuite" d'un alésage vers l'autre entraîne un mélange irréversible de plusieurs centaines de litres de peinture. De même, une fuite de peinture d'un quelconque endroit du module vers l'extérieur n'est détectable que visuellement. Or les machines de production utilisant de tels modules de changement de teinte fonctionnent de manière automatique avec le minimum d'intervention humaine. Une fuite de peinture ne sera détectée que très tardivement après avoir provoqué de grosses dégradations.

Comme indiqué plus haut, ces modules de changement de teinte doivent être implantés au plus près de la buse de pulvérisation, en général dans le bras de la machine de peinture supportant le pulvérisateur. Or la section du bras de la machine doit elle-même ne pas être trop importante car plus le bras est volumineux, plus il se salira par les surplus de peinture pulvérisés. Les dimensions d'un tel module équipé de l'ensemble de ses tuyaux doivent être donc réduites au maximum.

Dans les dispositifs connus, les conduits d'amenée et de retour de peinture au réservoir sont reliés aux canaux ménagés dans les modules par l'intermédiaire de raccords vissés. Ces raccords vissés sont volumineux, de telle sorte qu'il convient de maintenir un certain écartement entre deux raccords adjacents. Cet écartement important implique de disposer d'un module de bloc changeur de teinte de dimension également importante.

Le but de l'invention est de foumir un module de bloc changeur de teinte, de structure simple, d'encombrement très réduit, y compris après connexion des conduits d'amenée et de retour de peinture, qui possède une bonne sécurité d'utilisation, et avec lequel la maintenance puisse être réalisée dans des conditions simples et économiques.

A cet effet, dans le module que l'invention concerne, du genre précité, chaque canal d'amenée ou de retour de peinture est relié à un conduit extérieur par l'intermédiaire d'un raccord comportant une première partie de plus petit diamètre filetée extérieurement destinée à venir se visser dans un conduit extérieur et une seconde partie de diamètre plus important, entourée par au moins un joint, destinée à venir s'emboîter avec étanchéité dans un puits ménagé dans le module, dans le fond duquel débouche un canal, respectivement d'amenée ou de retour de peinture, et la première partie de plus petit diamètre du raccord est coudée.

Ce mode de connexion des conduits d'amenée et de retour de chaque peinture vers le réservoir permet de limiter l'encombrement de ces connexions, et par conséquent de rapprocher les canaux les uns des autres, ce qui permet une miniaturisation du module lui-même.

La forme coudée des raccords permet de limiter l'encombrement total incluant les conduits d'amenée et de retour de peinture. En outre, il convient de noter que le mode de connexion des conduits sur le bloc permet de réaliser l'orientation angulaire la plus adaptée pour bénéficier d'un encombrement réduit.

Afin de verrouiller les raccords des différents conduits dans le module, la face du module, dans laquelle débouchent les canaux d'amenée et de retour de peinture, comprend des moyens de verrouillage des parties de plus grand diamètre des raccords, en position emboîtée dans les puits correspondants.

Suivant une forme d'exécution, les moyens de verrouillage des raccords sont constitués par des pattes montées pivotantes ou coulissantes sur la face du module traversée par les raccords et destinées à prendre chacune appui sur la face extérieure de la partie de plus grand diamètre d'au moins un raccord. Ce montage permet au raccord de conserver une liberté de rotation lui assurant un meilleur montage et une meilleure maintenabilité.

Conformément à une autre caractéristique de l'invention, le nombre d'alésages destinés à loger des vannes pneumatiques est pair, les alésages étant regroupés par paires de deux alésages convergents, les deux alésages d'une même paire étant décalés axialement, suivant l'axe du canal central, d'une faible valeur, inférieure au diamètre des alésages.

Le fait de décaler les alésages d'une même paire l'un par rapport à l'autre permet, tout en bénéficiant d'une bonne compacité du module, d'éviter les défauts d'étanchéité. En effet, une miniaturisation d'un module avec des vannes en vis-à-vis risquerait de conduire à un amincissement des zones d'étanchéité pouvant se traduire par des micro-fuites de peinture, et par conséquent, par des mélanges de teintes préjudiciables, y compris dans le circuit de retour vers le réservoir de chaque teinte.

Avantageusement, ce module comprend des moyens d'assemblage complémentaires ménagés dans ses faces d'extrémité, constitués par une patte et un évidement complémentaires ménagés dans chaque face d'extrémité à proximité des deux parois latérales du module, et par une vis débouchant dans cet évidement et accessible à partir d'une surface à pan coupé, ces différents éléments étant disposés, de chaque côté du module, de telle sorte que chaque patte dépasse, à proximité d'une paroi latérale, de la face d'extrémité située le plus près d'un alésage pour une vanne, tandis que l'évidement complémentaire et la vis sont situés du côté de l'autre face d'extrémité, c'est-à-dire celle la plus éloignée de ce même alésage.

Le décalage des deux alésages d'une paire d'alésages est ainsi mis à profit pour réaliser un aménagement avantageux des moyens d'assemblage entre deux modules successifs. Il doit être noté que le nombre d'alésages peut varier entre deux et huit, pour un même module.

De toute façon l'invention sera bien comprise à l'aide de la description qui suit, en référence au dessin schématique annexé représentant, à titre d'exemple, une forme d'exécution d'un module de bloc changeur de teinte:
Figure 1 est une vue en perspective de deux modules identiques avant assemblage, chacun des modules étant destiné à gérer deux teintes différentes ;
Figure 2 est une vue de l'un des deux modules, du côté de sa face de montage des vannes ;
Figure 3 est une vue en coupe d'un module suivant la ligne III-III de figure 1.
Figure 4 est une vue d'un ensemble de modules de changement de couleur monté dans le bras d'une machine d'application de peinture.

Le module 1 représenté au dessin possède une forme générale parallélépipédique, comportant deux faces en bout 2 et 3, deux faces longitudinales 4, et deux faces latérales 5 et 6. Les faces latérales 5 et 6 comprennent chacune deux pans coupés 7 au niveau de leurs deux arêtes, ces pans coupés 7 formant entre eux des angles de 90°. Dans deux des pans coupés 7 débouchent deux alésages 8 qui convergent et débouchent dans un canal central 9 destiné à assurer l'alimentation en peinture d'une buse d'injection d'un pulvérisateur. Chaque alésage 8 sert au logement d'une vanne 10 commandée pneumatiquement, dont le pointeau 11 assure la fermeture de l'alésage 8 vis-à-vis du canal 9. Dans la face 6 du module débouchent un certain nombre de canaux 12, 13. Ces canaux 12, 13 débouchent dans une chambre 14 pouvant être mise ou non en communication avec le canal central 9 en fonction de la position du pointeau 11. Le canal 12 est un canal d'amenée de peinture et le canal 13 est un canal de retour de peinture vers le réservoir. Il est en effet important que la peinture circule en permanence afin d'éviter tout risque de sédimentation.

La vanne 10 est commandée pneumatiquement par amenée d'air comprimé dans un canal 15 débouchant également dans la paroi 6. Chaque canal 12, 13 débouche dans la paroi 6 par l'intermédiaire d'un puits 16 de section élargie. Chaque canal 12,13 est relié à un conduit extérieur 17 correspondant de circulation de peinture, par l'intermédiaire d'un raccord 21.

Chaque raccord 21 comprend une partie de plus grand diamètre 18 destinée à venir s'emboîter dans un puits 16 d'un canal 12,13, l'étanchéité étant réalisée par un joint torique 19. Cette partie 18 de plus grand diamètre se prolonge par une partie 20 de plus petit diamètre, possédant un filetage 22, sur laquelle est engagé le conduit 17. Comme montré au dessin, cette partie 20 peut être coudée pour donner au conduit 17 l'orientation souhaitée et limiter ainsi l'encombrement de l'ensemble. Compte tenu du mode de connexion, il est possible de donner au conduit 17 l'orientation souhaitée, par pivotement de la partie 18 de plus grand diamètre à l'intérieur du puits 16 constituant son logement. Dans la forme d'exécution représentée au dessin, la retenue des quatre raccords 21 à l'intérieur des puits 16 correspondants est assurée par deux rondelles à excentrique 23 maintenues par vissage dans la paroi 6 (vis 23a).

Il ressort de cette structure que, compte tenu du mode de connexion des conduits 17, par l'intermédiaire de raccords 21 très compacts, les conduits 12, 13 peuvent très rapprochés, permettant ainsi de réaliser un module 1 compact.

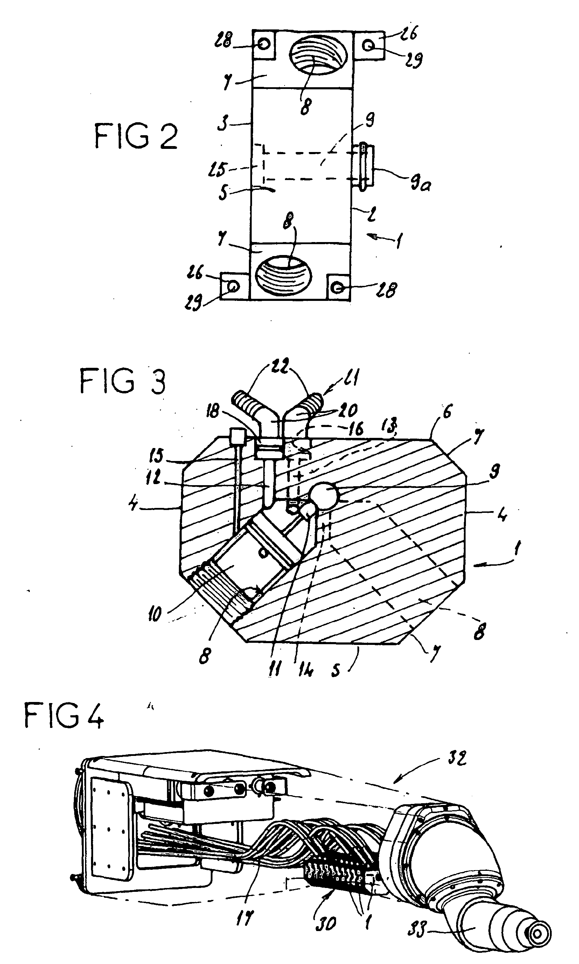

Comme cela ressort notamment des figures 2 et 3, les deux alésages 8 servant de logement aux deux vannes 10 sont décalés axialement l'un par rapport à l'autre, dans la direction du canal central 9. Le décalage est de faible valeur, inférieure au diamètre de l'alésage 8. Ce décalage permet d'obtenir une structure très compacte, sans que l'épaisseur de matière entre les alésages 8 ne soit trop réduite et nuise à l'étanchéité entre les circuits des différentes peintures.

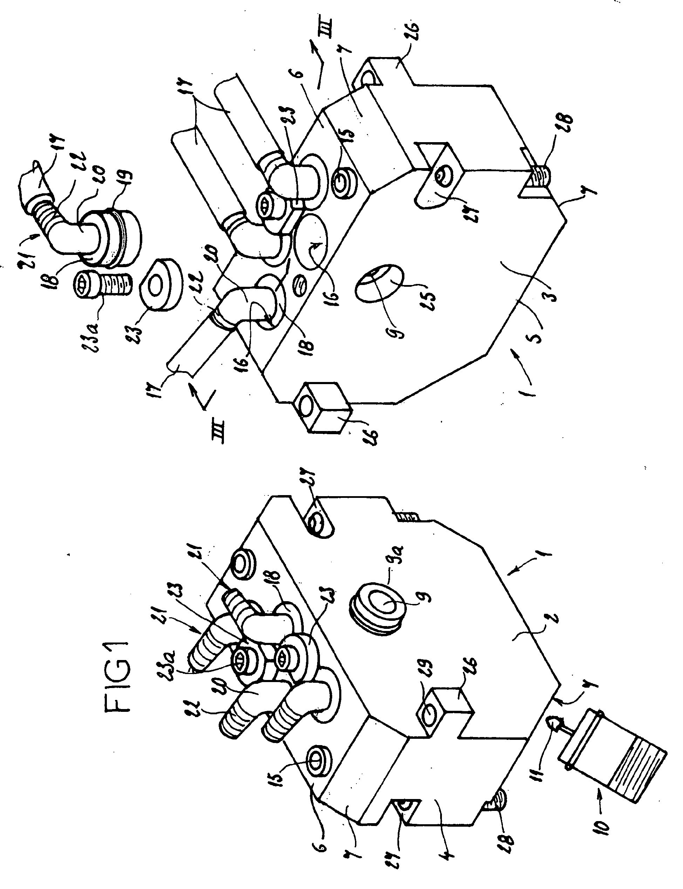

Il ressort notamment de la figure 1 que le module 1 selon l'invention peut être fixé de façon simple et rapide à des modules 1 similaires. A cet effet, le canal central 9 débouche dans la face en bout 2, au niveau d'un élément en saillie 9a de la face 2 qui peut pénétrer dans un évidement 25 de la face 3 d'un module 1 voisin. En outre, chaque module 1 est muni sur chacune de ses faces 2 et 3 d'une patte 26 et d'un évidement 27, les pattes 26 et les évidements 27 étant inversés sur les deux faces 2 et 3 de telle sorte que la patte 26 d'un module 1 puisse être engagée dans un évidement 27 du module 1 voisin. Sur chaque face en bout 2, 3, les pattes 26 sont disposées du côté où l'alésage 8 est le plus proche de la face 2 ou 3 considérée. Pour un même côté, les évidements 27 débouchent dans la face opposée, et sont chacun associés à une vis 28 destinée à traverser l'évidement 27 et à venir s'engager dans un trou 29 ménagé dans une patte 26. L'assemblage entre deux modules 1 est donc réalisé de façon simple et rapide par juxtaposition de ces modules et serrage de deux vis 28.

La figure 4 représente un bloc 30 de changement de teinte comportant des modules selon l'invention montés dans un bras 32 d'une machine d'application de peinture, avec pulvérisateur 33. Cette figure montre clairement les avantages fournis par l'invention, qui permet de loger et de raccorder sous un volume compact un nombre important de conduits 17.

Comme il ressort de ce qui précède, l'invention apporte une grande amélioration à la technique existante en fournissant un module 1 pour bloc changeur de teinte 30, de structure simple, très compact en lui-même, et, permettant également de rendre compact l'ensemble de conduits 17 qui lui est associé, et de maintenance simple, puisqu'un conduit 17 peut être démonté très rapidement du module 1.

On notera que ce module 1 pourrait comporter un nombre différent de paires d'alésages 8 destinés à recevoir des vannes 10, par exemple comporter quatre, six ou huit alésages, sans que l'on sorte pour autant du cadre de l'invention, telle que définie dans les revendications annexées.

## Revendications

1. Module de bloc changeur de teinte pour installation de peinture, du type possédant une forme générale parallélépipédique avec des parties (7), disposés symétriquement, dans lesquelles débouchent au moins deux alésages (8) qui convergent vers un canal (9), central et perpendiculaire aux faces d'extrémité (2, 3) du module, et qui débouchent également dans ce canal (9), chaque alésage (8) servant au logement d'une vanne (10) dont le clapet (11) est destiné, suivant sa position, à isoler ou à mettre en communication avec le canal central (9), une chambre (14) dans laquelle débouchent deux canaux (12, 13) respectivement d'amenée de peinture et de retour de peinture au réservoir, qui débouchent dans la paroi (6) du module (1) opposée aux parties (7) dans lesquelles débouchent les alésages (8), **caractérisé en ce que** chaque canal (12, 13) d'amenée ou de retour de peinture est relié à un conduit extérieur (17) par l'intermédiaire d'un raccord (21) comportant une première partie (20) de plus petit diamètre filetée extérieurement destinée à venir se visser dans un conduit extérieur (17) et une seconde partie (18) de diamètre plus important, entourée par au moins un joint (19), destinée à venir s'emboîter avec étanchéité dans un puits (16) ménagé dans le module (1), dans le fond duquel débouche un canal (12, 13), respectivement d'amenée ou de retour de peinture, et la partie (20) de plus petit diamètre du raccord (21) est coudée.

2. Module selon la revendication 1, **caractérisé en ce que** la face (6) du module, dans laquelle débouchent les canaux (12, 13) d'amenée et de retour de peinture, comprend des moyens (23, 23a) de verrouillage des parties de plus grand diamètre (18) des raccords (21), en position emboîtée dans les puits (9) correspondants.

3. Module selon la revendication 2, **caractérisé en ce que** les moyens de verrouillage des raccords (21) sont constitués par des pattes (23) montées pivotantes ou coulissantes sur la face (6) du module (1) traversée par les raccords (21), et destinées à prendre chacune appui sur la face extérieure de la partie (18) de plus grand diamètre d'au moins un raccord (21).

4. Module selon l'une des revendications 1 à 3, **caractérisé en ce que** le nombre d'alésages (8) destinés à loger des vannes pneumatiques (10) est pair, les alésages (8) étant regroupés par paires de deux alésages convergents, les deux alésages (8) d'une même paire étant décalés axialement, suivant l'axe du canal central (9), d'une faible valeur, inférieure au diamètre des alésages (8).

5. Module selon la revendication 4, **caractérisé en ce qu'**il comprend des moyens d'assemblage complémentaires ménagés dans ses faces d'extrémité, constitués par une patte (26) et un évidement complémentaire (27) ménagés dans chaque face d'extrémité (2, 3) à proximité des deux parois latérales (4) du module (1), et par une vis (28) débouchant dans cet évidement (27) et accessible à partir d'une surface (7) à pan coupé, ces différents éléments (26, 27, 28) étant disposés, de chaque côté du module (1), de telle sorte que chaque patte (26) dépasse, à proximité d'une paroi latérale (4), de la face d'extrémité (2, 3) située le plus près d'un alésage (8) pour une vanne (10), tandis que l'évidement complémentaire (27) et la vis (28) sont situés du côté de l'autre face d'extrémité (2, 3), c'est-à-dire celle la plus éloignée de ce même alésage (8).

## Claims

1. A color shade changing unit module for a painting installation, of the type that is generally parallelepiped-shaped with symmetrically arranged parts (7), leading in from which are at least two bores (8) that converge toward a central channel (9) perpendicular to the end faces (2, 3) of the module and that also lead into this channel (9), each bore (8) acting as a housing for a valve (10) whose closing element (11) is designed, depending on its position, to isolate, or to connect to the central channel (9), a chamber (14) into which two channels (12, 13) lead, a paint feed channel and a paint return channel leading to the tank, respectively, which lead out onto the opposite wall (6) of the module (1) from the parts (7) from which the bores (8) lead, **characterized in that** each paint feed or return channel (12, 13) is connected to an external pipe (17) via a connector (21) comprising an externally threaded first, smaller-diameter part (20) designed to screw into an external pipe (17) and a second, larger-diameter part (18) surrounded by at least one seal (19) and designed to fit leaktightly into a well (16) formed in the module (1), the bottom of which leads into a paint feed or return channel (12, 13) respectively, and the smaller-diameter part (20) of the connector (21) is angled.

2. The module as claimed in claim 1, **characterized in that that** face (6) of the module through which the paint feed and return channels (12, 13) pass comprises means (23, 23a) for clamping the larger-diameter parts (18) of the connectors (21) when the latter are in the engaged position in the corresponding wells (9)

3. The module as claimed in claim 2, **characterized in that** the means of clamping the connectors (21) consist of lugs (23) which are mounted so as to be able to pivot or slide on the face (6) of the module (1) through which the connectors (21) pass, and which are each designed to bear on the outer face of the larger diameter part (18) of at least one connecter (21).

4. The module as claimed in one of claims 1 to 3, **characterized in that** the number of bores (8) designed to house pneumatic valves (10) is even, the bores (8) being grouped in pairs of two converging bores, the two bores (8) of each pair being offset axially, along the axis of the central channel (9), by a small distance that is less than the diameter of the bores (8).

5. The module as claimed in claim 4, **characterized in that** it comprises complementary assembly means formed in its end faces, consisting of a lug (26) and a complementary recess (27), both formed in each end face (2, 3) in the vicinity of the two side walls (4) of the module (1), and a screw (28) passing into this recess (27) and accessible from a chamfered surface (7), these various elements (26, 27, 28) being arranged, on each side of the module (1), in such a way that each lug (26) projects, in the vicinity of a side wall (4), from the nearest end face (2, 3) to a bore (8) for a valve (10), while the complementary recess (27) and the screw (28) are situated near the other end face (2, 3), that is to say the end face furthest from this same bore (8).

## Patentansprüche

1. Modul für Farbwechsler-Block für ein Farbauftrags-Gerät, des Typs, der eine allgemeine Parallelepiped-Form mit symmetrisch angeordneten Flächen (7) aufweist, in die mindestens zwei Bohrungen (8) münden, die zu einem Kanal (9) hin zusammenlaufen, der zentral und senkrecht zu den Außenflächen (2, 3) des Moduls ist, und die ebenfalls in diesen Kanal (9) münden, wobei jede Bohrung (8) zur Aufnahme eines Ventils (10) dient, dessen Klappe (11) je nach ihrer Position dazu bestimmt ist, eine Kammer (14) von dem zentralen Kanal (9) abzutrennen oder mit ihm in Verbindung zu bringen, in die zwei Kanäle (12, 13) für die Farbzufuhr beziehungsweise für den Farbrücklauf in das Reservoir münden, die auch in die obere Seite (6) des Moduls (1) münden, die denjenigen Flächen (7) gegenüberliegt, in die die Bohrungen (8) münden, **dadurch gekennzeichnet, dass** jeder Kanal (12, 13) für die Farbzufuhr beziehungsweise den Farbrücklauf mit einer Außenleitung (17) mittels eines Verbindungsstücks (21) verbunden ist, das einen ersten Teil (20) mit Außengewinde mit kleinerem Durchmesser hat, der dazu dient, mit einer Außenleitung (17) verschraubt zu werden, und einen zweiten Teil (18) mit größerem Durchmesser, der von mindestens einer Dichtung (19) umgeben ist, der dazu dient, abdichtend in eine im Modul (1) vorgesehene Vertiefung (16) hineingesteckt zu werden, in deren Boden ein Kanal (12, 13) für die Farbzufuhr beziehungsweise den Farbrücklauf mündet, und **dadurch**, dass der Teil (20) mit dem kleineren Durchmesser des Verbindungsstücks (21) gewinkelt ist.

2. Modul nach Anspruch 1, **dadurch gekennzeichnet, dass** die obere Seite (6) des Moduls, an der die Kanäle (12, 13) für die Farbzufuhr beziehungsweise für den Farbrückfluß münden, Vorrichtungen (23, 23a) zum Verriegeln der Teile (18) mit größerem Durchmesser der Verbindungsstücke (21) umfasst, wenn sie in die entsprechenden Vertiefungen (16) hineingesteckt sind.

3. Modul nach Anspruch 2, **dadurch gekennzeichnet, dass** die Vorrichtungen zum Verriegeln der Verbindungsstücke (21) aus Scheiben (23) bestehen, die drehbar oder verschiebbar auf der oberen Seite (6) des Moduls (1) montiert sind, die von den Verbindungsstücken (21) durchquert wird, Scheiben, die dazu bestimmt sind, dass jede auf der Außenseite des Teils (18) mit größerem Durchmesser mindestens eines Verbindungsstücks (21) fest anliegt.

4. Modul nach einem der Ansprüche 1 bis 3, **dadurch gekennzeichnet, dass** die Zahl der Bohrungen (8), die dazu bestimmt sind, pneumatische Ventile (10) aufzunehmen, gerade ist, da die Bohrungen (8) paarweise aus zwei konvergenten Bohrungen angeordnet sind, wobei die zwei Bohrungen (8) desselben Paares der Achse des zentralen Kanals (9) folgend axial versetzt sind, und zwar um einen geringen Wert, der unter dem Durchmesser der Bohrungen (8) liegt.

5. Modul nach Anspruch 4, **dadurch gekennzeichnet, dass** es ergänzende Vorrichtungen zum Zusammenbau umfasst, die auf seinen Außenseiten angebracht sind und aus einem Vorsprung (26) und einer komplementären Aussparung (27) bestehen, die auf jeder Außenseite (2, 3) nahe bei den zwei Seitenwänden (4) des Moduls (1) angebracht sind, sowie aus einer Schraube (28), die in diese Aussparung (27) mündet und von einer abgeschrägten Fläche (7) aus zugänglich ist, wobei diese verschiedenen Elemente (26, 27, 28) auf jeder Seite des Moduls (1) derart angeordnet sind, dass jeder Vorsprung (26) nahe bei einer Seitenwand (4) aus der Außenseite (2, 3) herausragt, sehr nahe bei einer Bohrung (8) für ein Ventil (10) angeordnet, während die komplementäre Aussparung (27) und die Schraube (28) auf der anderen Seite der Außenseite (2, 3) angeordnet sind, das heißt, auf der von dieser Bohrung (8) am weitesten entfernten Seite.
